# EUROPEAN PATENT SPECIFICATION

(11) **EP 3 837 324 B1**
(45) Date of publication and mention of the grant of the patent: **17.08.2022**
(21) Application number: 19912687.1
(22) Date of filing: 29.01.2019
(51) Int. Cl.: C09D 11/103, C09D 11/107, C09D 11/03, C09D 11/02, G03G 9/00, G03G 15/10

(54) **ELECTROPHOTOGRAPHIC INK COMPOSITIONS**
ELEKTROFOTOGRAFISCHE TINTENZUSAMMENSETZUNGEN
COMPOSITIONS D'ENCRE ÉLECTROPHOTOGRAPHIQUE

(43) Date of publication of application: 23.06.2021
(73) Proprietor: Hewlett-Packard Development Company, L.P., Spring TX 77389 (US)
(72) Inventor: MAROM TCHAICHEEYAN, Hanit, 76101 Nes Ziona (IL); TEISHEV, Albert, 76101 Nes Ziona (IL)
(74) Representative: Beccarelli, Sandra Béatrice Yvonne
(86) International application number: PCT/US2019/015736
(87) International publication number: WO 2020/159486

(56) References cited:
- WO-A1-2018/166629
- WO-A1-2018/171873
- RU-C2- 2 556 690
- US-A1- 2011 123 228
- US-A1- 2015 323 879

## Description

Electrostatic printing processes can involve creating an image on a photoconductive surface, applying an ink having charged particles to the photoconductive surface, such that they selectively bind to the image, and then transferring the charged particles in the form of the image to a print substrate.

The photoconductive surface may be on a cylinder and may be termed a photo imaging plate (PIP). The photoconductive surface is selectively charged with a latent electrostatic image having image and background areas with different potentials. For example, an electrostatic ink composition comprising charged toner particles in a carrier liquid can be brought into contact with the selectively charged photoconductive surface. The charged toner particles adhere to the image areas of the latent image while the background areas remain clean. The image is then transferred to a print substrate (e.g. paper or plastic film) directly or, more commonly, by being first transferred to an intermediate transfer member, which can be a soft swelling blanket, and then to the print substrate.

### Brief Description of the Figures

Figure 1 shows the results of peeling tests on the printed ink compositions of examples of the present disclosure.
Figure 2 shows the results of peeling tests on the printed ink compositions of examples of the present disclosure.
Figure 3 shows the results of peeling tests on the printed ink compositions of examples of the present disclosure.

### Detailed Description

Before the present disclosure is disclosed and described, it is to be understood that this disclosure is not limited to the particular process steps and materials disclosed herein because such process steps and materials may vary somewhat. It is also to be understood that the terminology used herein is used for the purpose of describing particular embodiments. The terms are not intended to be limiting because the scope is intended to be limited by the appended claims and equivalents thereof.

It is noted that, as used in this specification and the appended claims, the singular forms "a," "an," and "the" include plural referents unless the context clearly dictates otherwise.

As used herein, "carrier fluid", "carrier liquid," "carrier," or "carrier vehicle" refers to the fluid in which pigment particles, resin, charge directors and other additives can be dispersed to form a liquid electrostatic ink composition or liquid electrophotographic ink composition. The carrier liquids may include a mixture of a variety of different agents, such as surfactants, co-solvents, viscosity modifiers, and/or other possible ingredients.

As used herein, "liquid electrostatic ink composition" or "liquid electrophotographic composition" generally refers to an ink composition that is typically suitable for use in an electrostatic printing process, sometimes termed an electrophotographic printing process. It may comprise pigment particles having a thermoplastic resin thereon. The electrostatic ink composition may be a liquid electrostatic ink composition, in which the pigment particles having resin thereon are suspended in a carrier liquid. The pigment particles having resin thereon will typically be charged or capable of developing charge in an electric field, such that they display electrophoretic behaviour. A charge director may be present to impart a charge to the pigment particles having resin thereon.

As used herein, "co-polymer" refers to a polymer that is polymerized from at least two monomers.

As used herein, "melt flow rate" generally refers to the extrusion rate of a resin through an orifice of defined dimensions at a specified temperature and load, usually reported as temperature/load, e.g. 190°C/2.16 kg. Flow rates can be used to differentiate grades or provide a measure of degradation of a material as a result of molding. In the present disclosure, unless otherwise stated, "melt flow rate" is measured per ASTM D1238 Standard Test Method for Melt Flow Rates of Thermoplastics by Extrusion Plastometer, as known in the art. If a melt flow rate of a particular polymer is specified, unless otherwise stated, it is the melt flow rate for that polymer alone, in the absence of any of the other components of the liquid electrostatic ink composition.

As used herein, "acidity," "acid number," or "acid value" refers to the mass of potassium hydroxide (KOH) in milligrams that neutralizes one gram of a substance. The acidity of a polymer can be measured according to standard techniques, for example as described in ASTM D1386. If the acidity of a particular polymer is specified, unless otherwise stated, it is the acidity for that polymer alone, in the absence of any of the other components of the liquid toner composition.

As used herein, "melt viscosity" generally refers to the ratio of shear stress to shear rate at a given shear stress or shear rate. Testing is generally performed using a capillary rheometer. A plastic charge is heated in the rheometer barrel and is forced through a die with a plunger. The plunger is pushed either by a constant force or at constant rate depending on the equipment. Measurements are taken once the system has reached steady-state operation. One method used is measuring Brookfield viscosity @ 140°C, units are mPa·s or cPoise, as known in the art. Alternatively, the melt viscosity can be measured using a rheometer, e.g. a commercially available AR-2000 Rheometer from Thermal Analysis Instruments, using the geometry of: 25mm steel plate-standard steel parallel plate, and finding the plate over plate rheometry isotherm at 120°C, 0.01 Hz shear rate. If the melt viscosity of a particular polymer is specified, unless otherwise stated, it is the melt viscosity for that polymer alone, in the absence of any of the other components of the electrostatic composition.

A certain monomer may be described herein as constituting a certain weight percentage of a polymer. This indicates that the repeating units formed from the said monomer in the polymer constitute said weight percentage of the polymer.

If a standard test is mentioned herein, unless otherwise stated, the version of the test to be referred to is the most recent at the time of filing this patent application.

As used herein, "electrostatic printing" or "electrophotographic printing" generally refers to the process that provides an image that is transferred from a photo imaging substrate either directly or indirectly via an intermediate transfer member to a print substrate, such as a plastic film. As such, the image is not substantially absorbed into the photo imaging substrate on which it is applied. Additionally, "electrophotographic printers" or "electrostatic printers" generally refer to those printers capable of performing electrophotographic printing or electrostatic printing, as described above. "Liquid electrostatic printing" is a specific type of electrostatic printing in which a liquid composition is employed in the electrophotographic process rather than a powder toner. An electrostatic printing process may involve subjecting the electrostatic composition to an electric field, for example, an electric field having a field gradient of 50-400 V/µm, or more, in some examples, 600-900V/µm, or more.

As used herein, "NVS" is an abbreviation of the term "non-volatile solids".

As used herein, the term "about" is used to provide flexibility to a numerical range endpoint by providing that a given value may be a little above or a little below the endpoint to allow for variation in test methods or apparatus. The degree of flexibility of this term can be dictated by the particular variable and would be within the knowledge of those skilled in the art to determine based on experience and the associated description herein.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not just the numerical values explicitly recited as the limits of the range, but also to include all the individual numerical values or sub-ranges encompassed within that range as if each numerical value and sub-range is explicitly recited. As an illustration, a numerical range of "about 1 wt% to about 5 wt%" should be interpreted to include not just the explicitly recited values of about 1 wt% to about 5 wt%, but also to include individual values and sub-ranges within the indicated range. Thus, included in this numerical range are individual values such as 2, 3.5, and 4 and sub-ranges such as from 1-3, from 2-4, and from 3-5, etc. This same principle applies to ranges reciting a single numerical value. Furthermore, such an interpretation should apply regardless of the breadth of the range or the characteristics being described.

As used herein, unless otherwise stated, wt.% values are to be taken as referring to a weight-for-weight (w/w) percentage of solids in the ink composition, and not including the weight of any carrier fluid present.

Unless otherwise stated, any feature described herein can be combined with any aspect or any other feature described herein. In an aspect, there is provided an electrophotographic ink composition. The electrophotographic ink composition may comprise:
a first resin comprising a copolymer of an alkylene monomer and a monomer selected from acrylic acid and methacrylic acid; and
a second resin comprising a condensation product of polyvinyl alcohol with an aldehyde.

In another aspect, there is provided a method of producing an electrophotographic ink composition. The method of producing an electrophotographic ink composition may comprise combining:
a first resin comprising a copolymer of an alkylene monomer and a monomer selected from acrylic acid and methacrylic acid; and
a second resin comprising a condensation product of polyvinyl alcohol with an aldehyde.

In a further aspect, there is provided a printed substrate. The printed substrate may comprise:
a plastic substrate; and
an electrophotographically printed ink composition disposed on the plastic substrate;
wherein the electrophotographically printed ink composition comprises:
   a first resin comprising a copolymer of an alkylene monomer and a monomer selected form acrylic acid and methacrylic acid; and
   a second resin comprising a condensation product of polyvinyl alcohol with an aldehyde.

Many electrophotographic ink compositions, particularly liquid electrophotographic ink compositions do not adhere well to plastic substrates. Instead, electrophotographically printing onto plastic substrates generally requires the application of a primer prior to printing the electrophotographic ink composition, for example, the liquid electrophotographic ink composition, to allow satisfactory adhesion between the plastic film and the ink composition. An electrophotographically printed ink composition has been devised that can be printed directly onto plastic films without requiring a primer to be applied first. Moreover, acceptable transferability of the composition from the intermediate transfer member to the plastic film substrate was also achieved.

### Electrophotographic ink composition

In an aspect, there is provided an electrophotographic ink composition. The electrophotographic ink composition may comprise a first resin comprising a copolymer of an alkylene monomer and a monomer selected from acrylic acid and methacrylic acid; and a second resin comprising a condensation product of polyvinyl alcohol with an aldehyde.

In some examples, the electrophotographic ink composition may be a liquid electrophotographic ink composition. In some examples, the liquid electrophotographic ink composition may comprise a carrier liquid. In some examples, the liquid electrophotographic ink composition may comprise the first resin, the second resin and a carrier liquid.

In some examples, the liquid electrophotographic ink composition may further comprise a charge director. In some examples, the liquid electrophotographic ink composition may further comprise a charge adjuvant. In some examples, the liquid electrophotographic ink composition may further comprise a charge adjuvant and a charge director.

In some examples, the electrophotographic ink composition, for example, the liquid electrophotographic ink composition, may further comprise a colorant. In some examples, the electrophotographic ink composition, for example, the liquid electrophotographic ink composition, may substantially lack or lack a colorant. In some examples, the electrophotographic ink composition, for example, the liquid electrophotographic ink composition, may further comprise a colorant and a charge director. In some examples, the electrophotographic ink composition, for example, the liquid electrophotographic ink composition, may further comprise a colorant and a charge adjuvant. In some examples, the electrophotographic ink composition, for example, the liquid electrophotographic ink composition, may further comprise a colorant, a charge adjuvant and a charge director.

In some examples, the electrophotographic ink composition comprises particles dispersed in a carrier liquid, wherein the particles comprise the first resin and the second resin. In some examples, the electrophotographic ink composition comprises particles dispersed in a carrier liquid, wherein the particles comprise a colorant, the first resin and the second resin. In some examples, the electrophotographic ink composition comprises particles dispersed in a carrier liquid, wherein the particles comprise a colorant, the first resin and the second resin.

In some examples, the electrophotographic ink composition, for example, the liquid electrophotographic ink composition, may also comprise other additives or a plurality of other additives.

### First resin

In some examples, the first resin comprises a copolymer of an alkylene monomer and a monomer selected from acrylic acid and methacrylic acid.

In some examples, the first resin comprises a copolymer of an alkylene monomer and an acrylic acid monomer. In some examples, the first resin comprises a copolymer of an alkylene monomer and a methacrylic acid monomer.

In some examples, the alkylene monomer is a C2 to C10 alkylene monomer, in some examples, a C2 to C5 alkylene monomer. In some examples the alkylene monomer is selected from ethylene and propylene. In some examples, the alkylene monomer is ethylene.

In some examples, the monomer selected from acrylic acid and methacrylic acid constitutes 10 wt.% or more of the monomers of the copolymer, for example, 11 wt.% or more, 12 wt.% or more, 13 wt.% or more, 14 wt.% or more, 15 wt.% or more, 16 wt.% or more, 17 wt.% or more, 18 wt.% or more, 19 wt.% or more, 20 wt.% or more, 25 wt.% or more, or about 30 wt.% of the monomers of the copolymer. In some examples, the monomer selected from acrylic acid and methacrylic acid constitutes 30 wt.% or less of the monomers of the copolymer, for example, 25 wt.% or less, 20 wt.% or less, 19 wt.% or less, 18 wt.% or less, 17 wt.% or less, 16 wt.% or less, 15 wt.% or less, 14 wt.% or less, 13 wt.% or less, 12 wt.% or less, 11 wt.% or less, or about 10 wt.% or less of the monomers of the copolymer. In some examples, the monomer selected from acrylic acid and methacrylic acid constitutes 10 wt.% to 30 wt.% of the monomers of the copolymer, for example, 11 wt.% to 25 wt.%, 12 wt.% to 20 wt.%, 13 wt.% to 19 wt.%, 13 wt.% to 18 wt.%, 14 wt.% to 17 wt.%, or 14 wt.% to 16 wt.% of the monomers of the copolymer. In some examples, the alkylene monomer makes up the remaining weight percent of the monomers of the copolymer.

In some examples, the first resin comprises a copolymer of an alkylene monomer and an acrylic acid monomer and a copolymer of an alkylene monomer and a methacrylic acid monomer. In some examples, the first resin comprises a 50:50 to 60:40 ratio of the acrylic acid containing copolymer to the methacrylic acid containing copolymer. In some examples, the first resin comprises a 50:50 to 55:45 ratio of the acrylic acid containing copolymer to the methacrylic acid containing copolymer. In some examples, the first resin comprises a 50:50 ratio of the acrylic acid containing copolymer to the methacrylic acid containing copolymer.

In some examples, the acrylic acid monomer constitutes 10 wt.% or more of the monomers of the copolymer of an alkylene monomer and an acrylic acid monomer, for example, 11 wt.% or more, 12 wt.% or more, 13 wt.% or more, 14 wt.% or more, 15 wt.% or more, 16 wt.% or more, 17 wt.% or more, 18 wt.% or more, 19 wt.% or more, 20 wt.% or more, 25 wt.% or more, or about 30 wt.% of the monomers of the copolymer of an alkylene monomer and an acrylic acid monomer. In some examples, the acrylic acid monomer constitutes 30 wt.% or less of the monomers of the copolymer of an alkylene monomer and an acrylic acid monomer, for example, 25 wt.% or less, 20 wt.% or less, 19 wt.% or less, 18 wt.% or less, 17 wt.% or less, 16 wt.% or less of the monomers of the copolymer of an alkylene monomer and an acrylic acid monomer in some examples, 15 wt.% or less, 14 wt.% or less, 13 wt.% or less, 12 wt.% or less, 11 wt.% or less, or about 10 wt.% or less of the monomers of the copolymer of an alkylene monomer and an acrylic acid monomer. In some examples, the acrylic acid monomer constitutes 10 wt.% to 30 wt.% of the monomers of the copolymer of an alkylene monomer and an acrylic acid monomer, for example, 11 wt.% to 25 wt.%, 12 wt.% to 20 wt.%, 13 wt.% to 19 wt.%, 13 wt.% to 18 wt.%, 14 wt.% to 17 wt.%, or 14 wt.% to 16 wt.% of the monomers of the copolymer of an alkylene monomer and an acrylic acid monomer. In some examples, the acrylic acid monomer constitutes 15 wt.% of the monomers of the copolymer of an alkylene monomer and an acrylic acid monomer. In some examples, the alkylene monomer makes up the remaining weight percent of the monomers of the copolymer of an alkylene monomer and an acrylic acid monomer.

In some examples, the copolymer of an alkylene monomer and an acrylic acid monomer has a melt viscosity of 15000 poise or less, for example, 10000 poise or less, 1000 poise or less, 100 poise or less, 50 poise or less, or 10 poise or less. The melt viscosity can be measured using a rheometer, e.g., a commercially available AR-2000 Rheometer from Thermal Analysis Instruments, using the geometry of: 25 mm steel plate-standard steel parallel plate, and finding the plate over plate rheometry isotherm at 120°C, 0.01 Hz shear rate. In some examples, the viscosity at 140°C of the copolymer of an alkylene monomer and an acrylic acid monomer is 1000 centipoise (cP) or less, for example, 900 cP or less, 800 cP or less, 700 cP or less, 600 cP or less, 500 cP or less, 400 cP or less, or about 300 cP. In some examples, the viscosity at 140°C the copolymer of an alkylene monomer and an acrylic acid monomer is 300 cP or more, for example, 400 cP or more, 500 cP or more, 600 cP or more, 700 cP or more, 800 cP or more, 900 cP or more, or about 1000 cP. In some examples, the viscosity at 140°C of the copolymer of an alkylene monomer and an acrylic acid monomer is 300 cP to 1000 cP, for example, 300 cP to 900 cP, 400 cP to 800 cP, 500 cP to 700 cP, 550 cP to 650 cP, 550 cP to 600 cP, or 600 cP to 650 cP.

In some examples, the copolymer of an alkylene monomer and an acrylic acid monomer has an acidity of 50 mg KOH/g or more, in some examples, 60 mg KOH/g or more, in some examples, 70 mg KOH/g or more, in some examples, 80 mg KOH/g or more, in some examples, 90 mg KOH/g or more, in some examples, 100 mg KOH/g or more, in some examples, 110 mg KOH/g or more, in some examples, 120 mg KOH/g, in some examples, 130 mg KOH/g or more, in some examples, 140 mg KOH/g or more, in some examples, 150 mg KOH/g or more, in some examples, 160 mg KOH/g or more, in some examples, 170 mg KOH/g or more, in some examples, 180 mg KOH/g or more, in some examples, about 190 mg KOH/g. In some examples, the copolymer of an alkylene monomer and an acrylic acid monomer has an acidity of 190 mg KOH/g or less, in some examples, 180 mg KOH/g or less, in some examples, 170 mg KOH/g or less, in some examples, 160 mg KOH/g or less, in some examples, 150 mg KOH/g or less, in some examples, 140 mg KOH/g or less, in some examples, 130 mg KOH/g or less, in some examples, 120 mg KOH/g or less, in some examples, 110 mg KOH/g or less, in some examples, 100 mg KOH/g or less, in some examples, 90 mg KOH/g or less, in some examples, 80 mg KOH/g or less, in some examples, 70 mg KOH/g or less, in some examples, 60 mg KOH/g or less, in some example about 50 mg KOH/g. In some examples, the copolymer of an alkylene monomer and an acrylic acid monomer has an acidity of 50 mg KOH/g to 190 mg KOH/g, in some examples, 60 mg KOH/g to 180 mg KOH/g, in some examples, 70 mg KOH/g to 170 mg KOH/g, in some examples, 80 mg KOH/g to 160 mg KOH/g, in some examples, 90 mg KOH/g to 150 mg KOH/g, in some examples, 100 mg KOH/g to 140 mg KOH/g, in some examples, 110 mg KOH/g to 130 mg KOH/g.

In some examples, the copolymer of an alkylene monomer and an acrylic acid monomer constitutes at least 50 wt.% of the first resin. In some examples, the copolymer of an alkylene monomer and an acrylic acid monomer constitutes at least 51 wt.% of the first resin, in some examples, at least 52 wt. % of the first resin, in some examples, at least 53 wt.% of the first resin, in some examples, at least 54 wt.% of the first resin, in some examples, at least 55 wt.% of the first resin, in some examples, at least 56 wt.% of the first resin, in some examples, at least 57 wt.% of the first resin, in some examples, at least 58 wt. % of the first resin, in some examples, at least 59 wt. % of the first resin, in some examples, at least 60 wt. % of the first resin. In some examples, the copolymer of an alkylene monomer and an acrylic acid monomer constitutes 60 wt.% or less of the first resin, in some examples, 59 wt.% or less of the first resin, in some examples, 58 wt.% or less of the first resin, in some examples, 57 wt.% or less of the first resin, in some examples, 56 wt.% or less of the first resin, in some examples, 55 wt.% or less of the first resin, in some examples, 54 wt.% or less of the first resin, in some examples, 53 wt.% or less of the first resin, in some examples, 52 wt.% or less of the first resin, in some examples, 51 wt.% or less of the first resin, in some examples, 50 wt.% or less of the first resin. In some examples, the copolymer of an alkylene monomer and an acrylic acid monomer constitutes 50 to 60 wt.% of the first resin, in some examples, 51 wt.% to 59 wt.%, in some examples, 52 wt.% to 58 wt.%, in some examples, 53 wt.% to 57 wt.%, in some examples, 54 wt.% to 56 wt.%, in some examples, 50 wt.% to 55 wt.% of the first resin. In some examples, the copolymer of an alkylene monomer and a methacrylic acid makes up the remaining amount of the first resin.

An example of a suitable copolymer of an alkylene monomer and an acrylic acid monomer resin is the AC^{®} 5120 resin from Honeywell.

In some examples, the methacrylic acid monomer constitutes 10 wt.% or more of the monomers of the copolymer of an alkylene monomer and a methacrylic acid monomer, for example, 11 wt.% or more, 12 wt.% or more, 13 wt.% or more, 14 wt.% or more, 15 wt.% or more, 16 wt.% or more, 17 wt.% or more, 18 wt.% or more, 19 wt.% or more, 20 wt.% or more, 25 wt.% or more, or about 30 wt.% of the monomers of the copolymer of an alkylene monomer and a methacrylic acid monomer. In some examples, the methacrylic acid monomer constitutes 30 wt.% or less of the monomers of the copolymer of an alkylene monomer and a methacrylic acid monomer, for example, 25 wt.% or less, 20 wt.% or less, 19 wt.% or less, 18 wt.% or less, 17 wt.% or less, 16 wt.% or less, 15 wt.% or less, 14 wt.% or less, 13 wt.% or less, 12 wt.% or less, 11 wt.% or less, or about 10 wt.% of the monomers of the copolymer of an alkylene monomer and a methacrylic acid monomer. In some examples, the methacrylic acid monomer constitutes 10 wt.% to 30 wt.% of the monomers of the copolymer of an alkylene monomer and a methacrylic acid monomer, for example, 11 wt.% to 25 wt.%, 12 wt.% to 20 wt.%, 13 wt.% to 19 wt.%, 13 wt.% to 18 wt.%, 14 wt.% to 17 wt.%, or 14 wt.% to 16 wt.% of the monomers of the copolymer of an alkylene monomer and a methacrylic acid monomer. In some examples, the methacrylic acid monomer constitutes 15 wt.% of the monomers of the copolymer of an alkylene monomer and a methacrylic acid monomer. In some examples, the alkylene monomer makes up the remaining weight percent of the monomers of the copolymer of an alkylene monomer and a methacrylic acid monomer.

In some examples, the copolymer of an alkylene monomer and a methacrylic acid monomer has a melt flow rate of 50 g/10 min or less, in some examples, 45 g/10 min or less, in some examples, 40 g/10 min or less, in some examples, 35 g/10 min or less, in some examples, 30 g/10 min or less, in some examples, 25 g/10 min or less, in some examples, 20 g/10 min or less, in some examples, 15 g/10 min or less, in some examples, 10 g/10 min or less, in some examples, the copolymer of an alkylene monomer and a methacrylic acid monomer has a melt flow rate of about 5 g/10 min. In some examples, the copolymer of an alkylene monomer and a methacrylic acid monomer has a melt flow rate of 5 g/10 min or more, in some examples, 10 g/10 min or more, in some examples, 15 g/10 min or more, in some examples, 20 g/10 min or more in some examples, 25 g/10 min or more, in some examples, 30 g/10 min or more, in some examples, 35 g/10 min or more, in some examples, 40 g/10 min or more, in some examples, 45 g/10 min or more, in some examples, about 50 g/10 min. In some examples, the copolymer of an alkylene monomer and a methacrylic acid monomer has a melt flow rate of from 5 g/10 min to 50 g/10 min, in some examples, 5 g/10 min to 45 g/10 min, in some examples, 10 g/10 min to 40 g/10 min, in some examples, 15 g/10 min to 35 g/10 min, in some examples, 20 g/10 min to 30 g/10 min. The melt flow rate can be measured by using ASTM D1238 or ISO 1133 at a temperature of 190°C and using 2.16 kg.

In some examples, the copolymer of an alkylene monomer and a methacrylic acid monomer constitutes at least 40 wt.% of the first resin, in some examples, at least 41 wt. % of the first resin, in some examples, at least 42 wt.% of the first resin, in some examples, at least 43 wt.% of the first resin, in some examples, at least 44 wt.% of the first resin, in some examples, at least 45 wt.% of the first resin, in some examples, at least 46 wt.% of the first resin, in some examples, at least 47 wt. % of the first resin, in some examples, at least 48 wt. % of the first resin, in some examples, at least 49 wt. % of the first resin, in some examples, at least 50 wt.% of the first resin. In some examples, the copolymer of an alkylene monomer and a methacrylic acid monomer constitutes 50 wt.% or less of the first resin, in some examples, 49 wt.% or less of the first resin, in some examples, 48 wt.% or less of the first resin, in some examples, 47 wt.% or less of the first resin, in some examples, 46 wt.% or less of the first resin, in some examples, 45 wt.% or less of the first resin, in some examples, 44 wt.% or less of the first resin, in some examples, 43 wt.% or less of the first resin, in some examples, 50 wt.% or less of the first resin, in some examples, 42 wt.% or less of the first resin, in some examples, 41 wt.% or less of the first resin, in some examples, 40 wt.% or less of the first resin. In some examples, the copolymer of an alkylene monomer and a methacrylic acid monomer constitutes 40 to 50 wt.% of the first resin, in some examples, 41 wt.% to 49 wt.%, in some examples, 42 wt.% to 48 wt.%, in some examples, 43 wt.% to 47 wt.%, in some examples, 44 wt.% to 46 wt.%, in some examples, 40 wt.% to 50 wt.% of the first resin. In some examples, the copolymer of an alkylene monomer and an acrylic acid monomer makes up the remaining amount of the first resin.

Examples of suitable copolymers of an alkylene monomer and a methacrylic acid monomer include the Nucrel^{®} resins 925, 599 and 2940 from DuPont.

In some examples, the first resin comprises 90 wt.% or less of the total amount of the resin, for example, 85 wt.% or less, 80 wt.% or less, 75 wt.% or less, 70 wt.% or less, 65 wt.% or less, or 60 wt.% or less of the total amount of the resin. In some examples, the first resin comprises 60 wt.% or more of the total amount of the resin, for example, 65 wt.% or more, 70 wt.% or more, 75 wt.% or more, 80 wt.% or more, 85 wt.% or more, or 90 wt.% or more. In some examples, the first resin comprises 60 wt.% to 90 wt.% of the total amount of the resin, 65 wt.% to 85 wt.%, 70 wt.% to 80 wt.%, or 75 wt.% to 90 wt.% of the total amount of the resin. In some examples, the first resin comprises 80 wt.% of the total amount of the resin. In some examples, the second resin makes up the remaining amount of the resin.

### Second resin

In some examples, the second resin comprises a condensation product of polyvinyl alcohol with an aldehyde. The condensation product of polyvinyl alcohol with an aldehyde comprises acetal groups. In some examples, the condensation product of polyvinyl alcohol with an aldehyde comprises acetal groups and alcohol groups. In some examples, the condensation product of polyvinyl alcohol with an aldehyde comprises acetal groups, alcohol groups and acetate groups.

In some examples, the polyvinyl alcohol comprises acetate groups. Acetate groups may be present when polyvinyl alcohol has been produced by hydrolysis of polyvinyl acetate.

As used herein, the proportion of acetal in the condensation product of polyvinyl alcohol with an aldehyde is expressed as a percentage of vinyl acetal monomers (for example, vinyl butyral monomers) within the condensation product, which is a polymer.

As used herein, the proportion of alcohol remaining in the condensation product of polyvinyl alcohol with an aldehyde will be expressed as a percentage of vinyl alcohol monomers within the condensation product, which is a polymer.

As used herein, the proportion of acetate remaining in the condensation product of polyvinyl alcohol with an aldehyde will be expressed as a percentage of vinyl acetate monomers within the condensation product, which is a polymer.

In some examples, the aldehyde is any aldehyde capable of reacting with polyvinyl alcohol to form acetal groups. In some examples, the aldehyde is selected from C1 to C8 aldehydes. In some examples, the aldehyde is selected from C1 to C5 aldehydes, for example, formaldehyde (methanal), acetaldehyde (ethanal), propionaldehyde (propanal), butyraldehyde (butanal), 2-methylpropanal (isobutanal), pentanal, and methylbutanal (2-methylbutanal or 3-methylbutanal). In some examples, the aldehyde is selected from formaldehyde and butyraldehyde. In some examples, the aldehyde is butyraldehyde.

In some examples, the second resin is polyvinyl butyral. In some examples, the polyvinyl butyral comprises vinyl acetal monomers (i.e., vinyl butyral monomers) and vinyl alcohol monomers. In some examples, the polyvinyl butyral comprises vinyl acetal monomers (i.e., vinyl butyral groups), vinyl alcohol monomers and vinyl acetate monomers.

In some examples, the second resin comprises 50% or more vinyl acetal monomer, for example, 55% or more, 60% or more, 65% or more, 70% or more, 75% or more, 80% or more, 85% or more, or 90% or more vinyl acetal. In some examples, the second resin comprises 90% or less vinyl acetal monomer, for example, 85% or less, 80% or less, 75% or less, 70% or less, 65% or less, 60% or less, 55% or less, 50% or less vinyl acetal. In some examples, the second resin comprises 50% to 90% vinyl acetal monomer, for example, 55% to 90%, 50% to 85%, 60% to 80%, 65% to 90%, 70% to 85%, or 75% to 80% vinyl acetal.

In some examples, the second resin comprises 5% or less vinyl acetate monomer, for example, 4.5% or less, 4% or less, 3.5% or less, 3% or less, 2.5% or less, 2% or less, 1.5% or less, 1% or less, 0.5% or less, or about 0% vinyl acetate. In some examples, the second resin comprises 0.5% or more vinyl acetate monomer, for example, 1% or more, 1.5% or more, 2% or more, 2.5% or more, 3% or more, 3.5% or more, 4% or more, 4.5% or more, or 5% or more vinyl acetate. In some examples, the second resin comprises 0.5% to 5% vinyl acetate monomer, for example, 1% to 4.5%, 1.5% to 4%, 2% to 3.5%, or 2.5% to 3% vinyl acetate.

In some examples, the second resin comprises 30% or less vinyl alcohol monomer, for example, 25% or less, 24% or less, 23% or less, 22% or less, 21% or less, 20% or less, 19% or less, 18% or less, 17% or less, 16% or less, 15% or less, 14% or less, 13% or less, 12% or less, 11% or less, 10% or less, or 5% or less vinyl alcohol. In some examples, the second resin comprises 5% or more vinyl alcohol monomer, for example, 10% or more, 11% or more, 12% or more, 13% or more, 15% or more, 15% or more, 16% or more, 17% or more, 18% or more, 19% or more, 20% or more, 21% or more, 22% or more, 23% or more, 24% or more, 25% or more, or 30% or more vinyl alcohol. In some examples, the second resin comprises 5% to 30% vinyl alcohol monomer, for example, 10% to 25%, 11% to 24%, 12% to 23%, 13% to 22%, 14% to 21%, 15% to 20%, 16% to 19%, 17% to 18% vinyl alcohol.

In some examples, the second resin comprises 80% vinyl acetal, 18% to 20% vinyl alcohol and up to 2% vinyl acetate.

In some examples, the second resin has a weight average molecular weight of 300,000 or less, for example, 290,000 or less, 280,000 or less, 270,000 or less, 260,000 or less, 250,000 or less, 240,000 or less, 230,000 or less, 220,000 or less, 210,000 or less, 200,000 or less, 190,000 or less, 180,000 or less, 170,000 or less, 160,000 or less, 150,000 or less, 140,000 or less, 130,000 or less, 120,000 or less, 110,000 or less, 100,000 or less, 90,000 or less, 80,000 or less, 70,000 or less, 60,000 or less, 50,000 or less, 40,000 or less, 30,000 or less, 20,000 or less, or 10,000 or less. In some examples, the second resin has a weight average molecular weight of 10,000 or more, for example, 20,000 or more, 30,000 or more, 40,000 or more, 50,000 or more, 60,000 or more, 70,000 or more, 80,000 or more, 90,000 or more, 100,000 or more, 110,000 or more, 120,000 or more, 130,000 or more, 140,000 or more, 150,000 or more, 160,000 or more, 170,000 or more, 180,000 or more, 190,000 or more, 200,000 or more, 210,000 or more, 220,000 or more, 230,000 or more, 240,000 or more, 250,000 or more, 260,000 or more, 270,000 or more, 280,000 or more, 290,000 or more, or 300,000 or more. In some examples, the second resin has a weight average molecular weight of 10,000 to 300,000, for example, 20,000 to 290,000, 30,000 to 280,000, 40,000 to 270,000, 50,000 to 260,000, 60,000 to 250,000, 70,000 to 230,000, 80,000 to 200,000, 90,000 to 190,000, 100,000 to 180,000, 110,000 to 170,000, 120,000 to 150,000, 130,000 to 140,000. The weight average molecular weight may be determined by ASTM D4001-13 Standard test method for determination of weight-average molecular weight of polymers by light scattering.

In some examples, the second resin comprises 40 wt.% or less of the total amount of resin, for example, 39 wt.% or less, 38 wt.% or less, 37 wt.% or less, 36 wt.% or less, 35 wt.% or less, 34 wt.% or less, 33 wt.% or less, 32 wt.% or less, 31 wt.% or less, 30 wt.% or less, 29 wt.% or less, 28 wt.% or less, 27 wt.% or less, 26 wt.% or less, 25 wt.% or less, 24 wt.% or less, 23 wt.% or less, 22 wt.% or less, 21 wt.% or less, 20 wt.% or less, 19 wt.% or less, 18 wt.% or less, 17 wt.% or less, 16 wt.% or less, 15 wt.% or less, 14 wt.% or less, 13 wt.% or less, 12 wt.% or less, 11 wt.% or less, or 10 wt.% or less of the total amount of resin. In some examples, the second resin comprises 10 wt.% or more of the total amount of resin, for example, 11 wt.% or more, 12 wt.% or more, 13 wt.% or more, 14 wt.% or more, 15 wt.% or more, 16 wt.% or more, 17 wt.% or more, 18 wt.% or more, 19 wt.% or more, 20 wt.% or more, 21 wt.% or more, 22 wt.% or more, 23 wt.% or more, 24 wt.% or more, 25 wt.% or more, 26 wt.% or more, 27 wt.% or more, 28 wt.% or more, 29 wt.% or more, 30 wt.% or more, 31 wt.% or more, 32 wt.% or more, 33 wt.% or more, 34 wt.% or more, 35 wt.% or more, 36 wt.% or more, 37 wt.% or more, 38 wt.% or more, 39 wt.% or more, or 40 wt.% or more of the total amount of resin. In some examples, the second resin comprises 10 wt.% to 40 wt.%, 11 wt.% to 39 wt.%, 12 wt.% to 38 wt.%, 13 wt.% to 37 wt.%, 14 wt.% to 36 wt.%, 15 wt.% to 35 wt.%, 16 wt.% to 34 wt.%, 17 wt.% to 33 wt.%, 18 wt.% to 32 wt.%, 19 wt.% to 31 wt.%, 20 wt.% to 30 wt.%, 21 wt.% to 29 wt.%, 22 wt.% to 28 wt.%, 23 wt.% to 27 wt.%, 24 wt.% to 26 wt.%, 25 wt.% to 40 wt.%, 10 wt.% to 25 wt.% of the total amount of resin.

### Carrier liquid

In some examples, the electrostatic ink composition comprises a carrier liquid.

The carrier liquid can include or be a hydrocarbon, silicone oil, vegetable oil, etc. The carrier liquid can include, for example, an insulating, non-polar, non-aqueous liquid that can be used as a medium for ink particles, i.e., the ink particles comprising the first resin and the second resin and, in some examples, a colorant. The carrier liquid can include compounds that have a resistivity in excess of about 10⁹ ohm·cm. The carrier liquid may have a dielectric constant below about 5, in some examples, below about 3. The carrier liquid can include hydrocarbons. The hydrocarbon can include, for example, an aliphatic hydrocarbon, an isomerized aliphatic hydrocarbon, branched chain aliphatic hydrocarbons, aromatic hydrocarbons, and combinations thereof. Examples of the carrier liquid include, for example, aliphatic hydrocarbons, isoparaffinic compounds, paraffinic compounds, dearomatized hydrocarbon compounds, and the like. In particular, the carrier liquid can include, for example, Isopar-G^{™}, Isopar-H^{™}, Isopar-L^{™}, Isopar-M^{™}, Isopar-K^{™}, Isopar-V^{™}, Norpar 12^{™}, Norpar 13^{™}, Norpar 15^{™}, Exxol D40^{™}, Exxol D80^{™}, Exxol D100^{™}, Exxol D130^{™}, and Exxol D140^{™} (each sold by EXXON CORPORATION); Teclen N-16^{™}, Teclen N-20^{™}, Teclen N-22^{™}, Nisseki Naphthesol L^{™}, Nisseki Naphthesol M^{™}, Nisseki Naphthesol H^{™}, #0 Solvent L^{™}, #0 Solvent M^{™}, #0 Solvent H^{™}, Nisseki Isosol 300^{™}, Nisseki Isosol 400^{™}, AF-4^{™}, AF-5^{™}, AF-6^{™} and AF-7^{™} (each sold by NIPPON OIL CORPORATION); IP Solvent 1620^{™} and IP Solvent 2028^{™} (each sold by IDEMITSU PETROCHEMICAL CO., LTD.); Amsco OMS^{™} and Amsco 460^{™} (each sold by AMERICAN MINERAL SPIRITS CORP.); and Electron, Positron, New II, Purogen HF (100% synthetic terpenes) (sold by ECOLINK^{™}).

The carrier liquid can constitute about 20% to 99.5% by weight of the electrostatic ink composition, in some examples, 50% to 99.5% by weight of the electrostatic ink composition. The carrier liquid may constitute about 40 to 90 % by weight of the electrostatic ink composition. The carrier liquid may constitute about 60% to 80% by weight of the electrostatic ink composition. The carrier liquid may constitute about 90% to 99.5% by weight of the electrostatic ink composition, in some examples, 95% to 99% by weight of the electrostatic ink composition.

The electrostatic ink composition, when printed on a print substrate, for example, a plastic film, may be substantially free from carrier liquid. In an electrostatic printing process and/or afterwards, the carrier liquid may be removed, for example, by an electrophoresis processes during printing and/or evaporation, such that substantially just solids are transferred to the print substrate, for example, a plastic film. Substantially free from carrier liquid may indicate that the ink printed on the print substrate contains less than 5 wt.% carrier liquid, in some examples, less than 2 wt.% carrier liquid, in some examples, less than 1 wt.% carrier liquid, in some examples, less than 0.5 wt.% carrier liquid. In some examples, the ink printed on the print substrate, for example, a plastic film, is free from carrier liquid.

### Charge adjuvant

In some examples, the liquid electrostatic ink composition includes a charge adjuvant. A charge adjuvant may promote charging of the particles when a charge director is present. The method of producing an electrostatic ink composition, as described herein, may involve adding a charge adjuvant at any stage. The charge adjuvant can include, for example, barium petronate, calcium petronate, Co salts of naphthenic acid, Ca salts of naphthenic acid, Cu salts of naphthenic acid, Mn salts of naphthenic acid, Ni salts of naphthenic acid, Zn salts of naphthenic acid, Fe salts of naphthenic acid, Ba salts of stearic acid, Co salts of stearic acid, Pb salts of stearic acid, Zn salts of stearic acid, Al salts of stearic acid, Zn salts of stearic acid, Cu salts of stearic acid, Pb salts of stearic acid, Fe salts of stearic acid, metal carboxylates (e.g., Al tristearate, Al octanoate, Li heptanoate, Fe stearate, Fe distearate, Ba stearate, Cr stearate, Mg octanoate, Ca stearate, Fe naphthenate, Zn naphthenate, Mn heptanoate, Zn heptanoate, Ba octanoate, Al octanoate, Co octanoate, Mn octanoate, and Zn octanoate), Co lineolates, Mn lineolates, Pb lineolates, Zn lineolates, Ca oleates, Co oleates, Zn palmirate, Ca resinates, Co resinates, Mn resinates, Pb resinates, Zn resinates, AB diblock copolymers of 2-ethylhexyl methacrylate-co-methacrylic acid calcium and ammonium salts, copolymers of an alkyl acrylamidoglycolate alkyl ether (e.g., methyl acrylamidoglycolate methyl ether-co-vinyl acetate), and hydroxy bis(3,5-di-tert-butyl salicylic) aluminate monohydrate. In an example, the charge adjuvant is or includes aluminum di- or tristearate. In some examples, the charge adjuvant is VCA (an aluminium stearate, available from Sigma Aldrich).

In some examples, the electrostatic ink composition further includes a salt of a multivalent cation and a fatty acid anion. The salt of a multivalent cation and a fatty acid anion can act as a charge adjuvant. The multivalent cation may, in some examples, be a divalent or a trivalent cation. In some examples, the multivalent cation is selected from Group 2, transition metals, Group 3 and Group 4 in the Periodic Table. In some examples, the multivalent cation includes a metal selected from Ca, Sc, Ti, V, Cr, Mn, Fe, Co, Ni, Cu, Zn, Al and Pb. In some examples, the multivalent cation is Al³⁺. The fatty acid anion may be selected from a saturated or unsaturated fatty acid anion. The fatty acid anion may be a C₈ to C₂₆ fatty acid anion, in some examples, a C₁₄ to C₂₂ fatty acid anion, in some examples, a C₁₆ to C₂₀ fatty acid anion, in some examples, a C₁₇, C₁₈ or C₁₉ fatty acid anion. In some examples, the fatty acid anion is selected from a caprylic acid anion, capric acid anion, lauric acid anion, myristic acid anion, palmitic acid anion, stearic acid anion, arachidic acid anion, behenic acid anion and cerotic acid anion.

The charge adjuvant may be present in an amount of about 0.1% to about 5% by weight, in some examples, about 0.1% to about 1% by weight, in some examples, about 0.3% to about 0.8% by weight of the solids of the electrostatic ink composition, in some examples, about 1 wt.% to about 3 wt.% of the solids of the electrostatic ink composition, in some examples, about 1.5 wt.% to about 2.5 wt.% of the solids of the electrostatic ink composition.

The charge adjuvant may be present in an amount of about 5.0% by weight or less of total solids of the electrostatic ink composition, in some examples, in an amount of about 4.5% by weight or less, in some examples, in an amount of about 4.0% by weight or less, in some examples, in an amount of about 3.5% by weight or less, in some examples, in an amount of about 3.0% by weight or less, in some examples, in an amount of about 2.5% by weight or less, in some examples, about 2.0% or less by weight of the solids of the electrostatic ink composition.

The charge adjuvant, which may, for example, be or include a salt of a multivalent cation and a fatty acid anion, may be present in an amount of about 0.1 wt.% to about 5 wt.% of the solids of the electrostatic ink composition, in some examples, in an amount of about 0.1 wt.% to about 2 wt.% of the solids of the electrostatic ink composition, in some examples, in an amount of about 0.3 wt.% to about 1.5 wt.% of the solids of the electrostatic ink composition, in some examples, about 0.5 wt.% to about 1.2 wt.% of the solids of the electrostatic ink composition, in some examples, about 0.8 wt.% to about 1 wt.% of the solids of the electrostatic ink composition, in some examples, about 1 wt.% to about 3 wt.% of the solids of the electrostatic ink composition, in some examples, about 1.5 wt.% to about 2.5 wt.% of the solids of the electrostatic ink composition.

### Charge director

In some examples, the liquid electrostatic ink composition includes a charge director. The charge director may be added to a liquid electrostatic ink composition in order to impart and/or maintain sufficient electrostatic charge on the resin particles. In some examples, the charge director may comprise ionic compounds, particularly metal salts of fatty acids, metal salts of sulfosuccinates, metal salts of oxyphosphates, metal salts of alkyl-benzenesulfonic acid, metal salts of aromatic carboxylic acids or sulfonic acids, as well as zwitterionic and non-ionic compounds, such as polyoxyethylated alkylamines, lecithin, polyvinylpyrrolidone, organic acid esters of polyvalent alcohols, etc. The charge director can be selected from, but is not limited to, oil-soluble petroleum sulfonates (e.g., neutral Calcium Petronate^{™}, neutral Barium Petronate^{™}, and basic Barium Petronate^{™}), polybutylene succinimides (e.g. OLOA^{™} 1200 and Amoco 575), and glyceride salts (e.g., sodium salts of phosphated mono- and diglycerides with unsaturated and saturated acid substituents), sulfonic acid salts including, but not limited to, barium, sodium, calcium, and aluminium salts of sulfonic acid. The sulfonic acids may include, but are not limited to, alkyl sulfonic acids, aryl sulfonic acids, and sulfonic acids of alkyl succinates. The charge director can impart a negative charge or a positive charge on the resin-containing particles of a liquid electrostatic ink composition.

The charge director may be added in order to impart and/or maintain sufficient electrostatic charge on the ink particles, which may be particles comprising the first resin and the second resin.

In some examples, the electrostatic ink composition comprises a charge director comprising a simple salt. The ions constructing the simple salts are all hydrophilic. The simple salt may include a cation selected from the group consisting of Mg, Ca, Ba, NH₄, tert-butyl ammonium, Li⁺, and Al³⁺, or from any sub-group thereof. The simple salt may include an anion selected from the group consisting of SO₄²⁻, PO³⁻, NO³⁻, HPO₄²⁻, CO₃²⁻, acetate, trifluoroacetate (TFA), Cl⁻, BF₄⁻, F⁻, ClO₄⁻, and TiO₃⁴⁻ or from any sub-group thereof. The simple salt may be selected from CaCO₃, Ba₂TiO₃, Al₂(SO₄), Al(NO₃)₃, Ca₃(PO₄)₂, BaSO₄, BaHPO₄, Ba₂(PO₄)₃, CaSO₄, (NH₄)₂CO₃, (NH₄)₂SO₄, NH₄OAC, tert-butyl ammonium bromide, NH₄NO₃, LiTFA, Al₂(SO₄)₃, LiClO₄ and LiBF₄, or any sub-group thereof.

In some examples, the electrostatic ink composition comprises a charge director comprising a sulfosuccinate salt of the general formula MAₙ, wherein M is a metal, n is the valence of M, and A is an ion of the general formula (I): [R¹-O-C(O)CH₂CH(SO₃⁻)-C(O)-O-R²], wherein each of R¹ and R² is an alkyl group. In some examples each of R¹ and R² is an aliphatic alkyl group. In some examples, each of R¹ and R² independently is a C6-25 alkyl. In some examples, said aliphatic alkyl group is linear. In some examples, said aliphatic alkyl group is branched. In some examples, said aliphatic alkyl group includes a linear chain of more than 6 carbon atoms. In some examples, R¹ and R² are the same. In some examples, at least one of R¹ and R² is C₁₃H₂₇. In some examples, M is Na, K, Cs, Ca, or Ba.

In some examples, the charge director comprises at least one micelle forming salt and nanoparticles of a simple salt as described above. The simple salts are salts that do not form micelles by themselves, although they may form a core for micelles with a micelle forming salt. The sulfosuccinate salt of the general formula MAₙ is an example of a micelle forming salt. The charge director may be substantially free of an acid of the general formula HA, where A is as described above. The charge director may include micelles of said sulfosuccinate salt enclosing at least some of the nanoparticles of the simple salt. The charge director may include at least some nanoparticles of the simple salt having a size of 200 nm or less, and/or in some examples, 2 nm or more.

The charge director may include one of, some of or all of (i) soya lecithin, (ii) a barium sulfonate salt, such as basic barium petronate (BPP), and (iii) an isopropyl amine sulfonate salt. Basic barium petronate is a barium sulfonate salt of a C21-26 hydrocarbon alkyl, and can be obtained, for example, from Chemtura. An example isopropyl amine sulfonate salt is dodecyl benzene sulfonic acid isopropyl amine, which is available from Croda.

In some examples, the charge director constitutes about 0.001% to about 20%, in some examples, about 0.01% to about 20% by weight, in some examples, about 0.01 to about 10% by weight, in some examples, about 0.01% to about 1% by weight of the solids of an electrostatic ink composition. In some examples, the charge director constitutes about 0.001% to about 0.15% by weight of the solids of the electrostatic ink composition, in some examples, about 0.001% to about 0.15%, in some examples, about 0.001% to about 0.02% by weight of the solids of an electrostatic ink composition, in some examples, about 0.1% to about 2% by weight of the solids of the electrostatic ink composition, in some examples, about 0.2% to about 1.5% by weight of the solids of the electrostatic ink composition, in some examples, about 0.1% to about 1% by weight of the solids of the electrostatic ink composition, in some examples, about 0.2% to about 0.8% by weight of the solids of the electrostatic ink composition.

In some examples, the charge director is present in an amount of from about 3 mg/g to about 80 mg/g, in some examples, 3 mg/g to about 50 mg/g, in some examples, 3 mg/g to about 20 mg/g, in some examples, from about 3 mg/g to about 15 mg/g, in some examples, from about 10 mg/g to about 15 mg/g, in some examples, from about 5 mg/g to about 10 mg/g (where mg/g indicates mg per gram of solids of the electrostatic ink composition).

### Colorant

The electrostatic ink composition may include a colorant. In some examples, the colorant may be a dye or pigment.

The electrostatic ink composition may substantially lack or lack a colorant. The electrostatic ink composition may be a transparent electrostatic ink composition. In some examples, the transparent electrostatic ink composition does not contain any colorant, or substantially lacks colorant and thus is a colorant-free composition or substantially colorant-free composition. The transparent electrostatic ink composition may otherwise be termed a colourless electrostatic ink composition or a colourless varnish for electrostatic printing. In some examples, substantially lacks may indicate that the transparent electrostatic ink composition comprises 5 wt.% solids or less of colorant, in some examples, 3 wt.% solids or less of colorant, in some examples, 1 wt.% solids or less of colorant. "Colorant" may be a material that imparts a colour to the ink composition. As used herein, "colorant" includes pigments and dyes, such as those that impart colours, such as black, magenta, cyan, yellow and white to an ink. As used herein, "pigment" generally includes pigment colorants, magnetic particles, aluminas, silicas, and/or other ceramics or organometallics. Thus, though the present description primarily exemplifies the use of pigment colorants, the term "pigment" can be used more generally to describe not only pigment colorants, but also other pigments such as organometallics, ferrites, ceramics, and so forth.

The colorant can be any colorant compatible with the carrier liquid and useful for electrostatic printing. For example, the colorant may be present as pigment particles, or may comprise a resin as described herein and a pigment. The pigments can be any of those standardly used in the art. In some examples, the colorant is selected from a cyan pigment, a magenta pigment, a yellow pigment and a black pigment. For example, pigments by Hoechst including Permanent Yellow DHG, Permanent Yellow GR, Permanent Yellow G, Permanent Yellow NCG-71, Permanent Yellow GG, Hansa Yellow RA, Hansa Brilliant Yellow 5GX-02, Hansa Yellow X, NOVAPERM^{®} YELLOW HR, NOVAPERM^{®} YELLOW FGL, Hansa Brilliant Yellow 10GX, Permanent Yellow G3R-01, HOSTAPERM^{®} YELLOW H4G, HOSTAPERM^{®} YELLOW H3G, HOSTAPERM^{®} ORANGE GR, HOSTAPERM^{®} SCARLET GO, Permanent Rubine F6B; pigments by Sun Chemical including L74-1357 Yellow, L75-1331 Yellow, L75-2337 Yellow; pigments by Heubach including DALAMAR^{®} YELLOW YT-858-D; pigments by Ciba-Geigy including CROMOPHTHAL^{®} YELLOW 3 G, CROMOPHTHAL^{®} YELLOW GR, CROMOPHTHAL^{®} YELLOW 8 G, IRGAZINE^{®} YELLOW 5GT, IRGALITE^{®} RUBINE 4BL, MONASTRAL^{®} MAGENTA, MONASTRAL^{®} SCARLET, MONASTRAL^{®} VIOLET, MONASTRAL^{®} RED, MONASTRAL^{®} VIOLET; pigments by BASF including LUMOGEN^{®} LIGHT YELLOW, PALIOGEN^{®} ORANGE, HELIOGEN^{®} BLUE L 690 IF, HELIOGEN^{®} BLUE TBD 7010, HELIOGEN^{®} BLUE K 7090, HELIOGEN^{®} BLUE L 710 IF, HELIOGEN^{®} BLUE L 6470, HELIOGEN^{®} GREEN K 8683, HELIOGEN^{®} GREEN L 9140; pigments by Mobay including QUINDO^{®} MAGENTA, INDOFAST^{®} BRILLIANT SCARLET, QUINDO^{®} RED 6700, QUINDO^{®} RED 6713, INDOFAST^{®} VIOLET; pigments by Cabot including Maroon B STERLING^{®} NS BLACK, STERLING^{®} NSX 76, MOGUL^{®} L; pigments by DuPont including TIPURE^{®} R-101; and pigments by Paul Uhlich including UHLICH^{®} BK 8200. If the pigment is a white pigment particle, the pigment particle may be selected from the group consisting of TiO₂, calcium carbonate, zinc oxide, and mixtures thereof. In some examples, the white pigment particle may comprise an alumina-TiO₂ pigment.

The colorant or pigment may be present in the electrostatic ink composition in an amount of from 10 wt.% to 80 wt.% of the total amount of resin and colorant, in some examples, 15 wt.% to 80 wt.%, in some examples 15 wt.% to 60 wt.%, in some examples, 15 wt.% to 50 wt.%, in some examples, 15 wt.% to 40 wt.%, in some examples, 15 wt.% to 30 wt.% of the total amount of resin and colorant. In some examples, the colorant or pigment particle may be present in the electrostatic ink in an amount of at least 50 wt.% of the total amount of resin and colorant or pigment, for example at least 55 wt.% of the total amount of resin and colorant or pigment.

### Other additives

The electrostatic ink composition may include other additives or a plurality of other additives. The other additive or plurality of other additives may be added at any stage of the method of producing an electrostatic ink composition. The other additive or plurality of other additives may be selected from a charge adjuvant, a wax, a surfactant, viscosity modifiers, and compatibility additives. The wax may be an incompatible wax. As used herein, "incompatible wax" may refer to a wax that is incompatible with the resin. Specifically, the wax phase separates from the resin phase upon cooling of the resin fused mixture on a print substrate, for example, a plastic film, during and after the transfer of the ink film to the print substrate, for example, from an intermediate transfer member, which may be a heated blanket.

### Method of Producing an Electrophotographic Ink Composition

In an aspect, there is provided a method of producing an electrophotographic ink composition. In some examples, the method of producing an electrophotographic ink composition may comprise combining a first resin comprising a copolymer of an alkylene monomer and a monomer selected from acrylic acid and methacrylic acid; and a second resin comprising a condensation product of polyvinyl alcohol with an aldehyde.

In some examples, the method of producing an electrophotographic ink composition may comprise suspending the first resin and the second resin in a carrier liquid. In some examples, the electrophotographic ink composition comprises chargeable particles comprising a first resin and a second resin. In some examples, the method may comprise suspending the chargeable particles comprising a first resin and a second resin in a carrier liquid.

In some examples, the method may comprise dispersing a first resin and a second resin in a carrier liquid. In some examples, the method may comprise dispersing chargeable particles comprising the first resin and the second resin in a carrier liquid.

In some examples, the method may comprise combining the first resin with the carrier liquid and subsequently adding the second resin. In some examples, the method comprises combining the first resin with the carrier liquid to form a paste and subsequently combining the second resin with the paste. In some examples, the method comprises combining the first resin and a portion of the second resin (for example, half the second resin) with the carrier liquid to form a paste and subsequently combining the remaining portion of the second resin with the paste.

In some examples, the first resin and the carrier liquid are combined and heated to an elevated temperature to form a paste before combining the second resin with the paste. In some examples, the first resin, a portion of the second resin (for example, half the second resin) and the carrier liquid are combined and heated to an elevated temperature to form a paste before combining the remaining portion of the second resin with the paste.

In some examples, the first resin and the carrier liquid are combined, heated to an elevated temperature and cooled (for example, to room temperature) to form a paste before combining the second resin with the paste. In some examples, the first resin, a portion of the second resin (for example, half the second resin) and the carrier liquid are combined, heated to an elevated temperature and cooled (for example, to room temperature) to form a paste before combining the remaining portion of the second resin with the paste.

In some examples, the elevated temperature is above the melting point of the first resin. The melting point of the resin may be determined by differential scanning calorimetry, for example, using ASTM D3418. In some examples, the elevated temperature is a temperature of at least 70°C, for example, at least 80°C, for example, at least 90°C, for example, at least 100°C, for example, at least 110°C, for example, at least 120°C, for example, 130°C, for example, to melt the resin, which may be the first resin or a combination of the first resin and the second resin (for example a portion of the second resin).

In some examples, the cooling of the combined and heated resin (or resins) and carrier liquid is to a temperature below the melting point of the resins, for example, to room temperature. In some examples, room temperature may be 25°C or less, for example, between 20°C and 25°C.

In some examples, the first resin and carrier liquid are combined and heated until the resin has melted and/or dissolved in the carrier liquid before adding the second resin. Melting and/or dissolving the first resin in the carrier liquid may result in the carrier fluid appearing clear and homogeneous.

In some examples, the paste is formed by mixing the resin (or resins) and the carrier liquid at a mixing rate of 500 rpm or less, for example, 400 rpm or less, for example, 300 rpm or less, for example, 200 rpm or less, for example, 100 rpm or less, for example, 75 rpm or less, for example, 50 rpm. In some examples, mixing may continue until melting and/or dissolution of the resin (or resins) in the carrier liquid is complete.

In some examples, the first resin, a portion of the second resin (for example, half of the second resin) and the carrier liquid are combined and heated until the resin has melted and/or dissolved in the carrier liquid before adding the remaining portion of the second resin.

In some examples, combining the second resin with the paste comprises grinding the second resin and the paste. In some examples, combining the remaining portion of the second resin with the paste comprises grinding the remaining portion of the second resin and the paste.

In some examples, the method comprises adding a colorant to the combined first resin, second resin and carrier liquid. In some examples, the method comprises adding a colorant and the second resin to the paste (that is, the combined first resin and carrier liquid). In some examples, the method comprises adding a colorant and the remaining portion of the second resin to the paste (that is the combined first resin, portion of the second resin and carrier liquid).

In some examples, the method comprises adding a colorant to the combined first resin, second resin and carrier liquid to form chargeable particles comprising the resins and the colorant. In some examples, the method comprises adding a colorant and the second resin to the paste (that is, the combined first resin and carrier liquid) to form chargeable particles comprising the resins and the colorant. In some examples, the method comprises adding a colorant and the remaining portion of the second resin to the paste (that is, the combined first resin, potion of the second resin and carrier liquid) to form chargeable particles comprising the resins and the colorant.

In some examples, the after the colorant is added, the mixture is ground.

In some examples, the method comprises grinding at a grinding speed of at least 50 rpm, for example, at least 100 rpm, at least 150 rpm, at least 200 rpm, at least 225 rpm, or about 250 rpm. In some examples, the method comprises grinding at a grinding speed of up to about 600 rpm, for example, up to about 500 rpm, up to about 400 rpm, up to about 350 rpm, up to about 300 rpm, or about 250 rpm. In some examples, the method comprises grinding at a grinding speed of 50 rpm to 600 rpm, for example, 100 rpm to 500 rpm, 150 rpm, to 400 rpm, 200 rpm to 350 rpm, or 200 rpm to 300 rpm. In some examples, the method comprises grinding for at least 1 h, in some examples, for at least 2 h. In some examples, the method comprises grinding for up to about 12 h. In some examples, the method comprises grinding at a temperature of at least about 30°C, for example, at least about 35°C, for example, at least about 40°C, for example, at least about 50°C. In some examples, the method comprises grinding at a temperature of at least about 50°C for a first time period, in some examples, for at least 1 h, in some examples, for at least 1.5 h and then reducing the temperature to a temperature of at least 30°C, in some examples, at least 35°C and continuing grinding for at least 5 h, in some examples, at least 9 h, in some examples, at least 10 h.

In some examples, the method comprises adding a charge adjuvant at any stage in the process. In some examples, the method comprises adding the charge adjuvant at the same time as the second resin. In some examples, the method comprises adding the charge adjuvant at the same time as the remaining portion of the second resin. In some examples, the method comprises adding the charge adjuvant at the same time as the colorant.

In some examples, the method comprises adding a charge director to combined first resin, second resin and carrier liquid.

### Method of Producing a Printed Substrate

Also provided is a method of producing a printed substrate. The method of producing a printed substrate may comprise applying an electrostatic ink composition (described above) to a substrate with an electrostatic printer. During printing the electrostatic ink composition may be a liquid electrostatic ink composition. In some examples, the method of producing a printed substrate may comprise applying a liquid electrostatic ink composition (described above) to a substrate with a liquid electrostatic printer.

In some examples, the method comprises electrostatically printing an electrostatic ink composition (described above) on a substrate with an electrostatic printer. In some examples, the method comprises electrostatically printing a liquid electrostatic ink composition (described above) on a substrate with a liquid electrostatic printer.

In some examples, electrostatically printing an electrostatic ink composition comprises contacting the electrostatic ink composition with a latent electrostatic image on a surface to create a developed image and transferring the developed image to a substrate, in some examples, via an intermediate transfer member. In some examples, electrostatically printing a liquid electrostatic ink composition comprises contacting the liquid electrostatic ink composition with a latent electrostatic image on a surface to create a developed image and transferring the developed image to a substrate, in some examples, via an intermediate transfer member.

In some examples, the method does not include a step of printing a primer onto the substrate. In some examples, the electrostatic ink composition is electrostatically printed directly onto the substrate, for example, the plastic substrate. In some examples, the substrate is subjected to corona treatment prior to printing the electrostatic ink composition. In some examples, the corona treatment may improve the surface polarity of the substrate. During the corona treatment, polar groups, such as hydroxyl, ketone and carboxyl groups, may be grafted onto the surface of the substrate. The corona treatment may be performed in a corona chamber at room temperature and atmospheric pressure.

The substrate onto which the ink composition is applied may be a plastic substrate. The substrate onto which the ink composition is applied may be a plastic film. In some examples, the substrate onto which the ink composition is applied may comprise a polymeric material. In some examples, the substrate may be any plastic substrate (for example, any plastic film) capable of having an image printed thereon. The plastic substrate may include a synthetic polymeric material, for example, a polymer formed from alkylene monomers, including, for example, polyethylene and polypropylene, and co-polymers such as styrene-polybutadiene polymers. The polypropylene may, in some examples, be biaxially orientated polypropylene. In some examples, the plastic substrate (for example, a plastic film) may comprise polyethylene terephthalate.

In some examples, the plastic substrate is a thin film. In some examples, the plastic substrate comprises polyethylene (PE), linear low density polyethylene (LLDPE), low density polyethylene (LDPE), medium density polyethylene (MDPE), high density polyethylene (HDPE), polypropylene (PP), cast (cPP) or biaxially oriented polypropylene (BOPP), oriented polyamide (OPA), or polyethylene terephthalate (PET).

In some examples, the substrate comprises a plurality of layers of material laminated together to form a pre-laminated substrate in which a plastic film forms the surface onto which electrostatic ink can be applied. In some examples, the substrate comprises a plurality of layers of film laminated together to form a pre-laminated substrate in which a plastic film forms the surface onto which electrostatic ink can be applied. In an example, the substrate may be a plastic film laminated to, adhered to or coated on a cellulosic paper. In some examples, the substrate comprises a plurality of layers of material selected from polymeric materials (e.g. polymeric materials selected from PE, LLDPE, MDPE, PP, BOPP, PET and OPA), metallic materials (e.g. metallic foils such as aluminium foil, or metallized films such as met-PET, met-BOPP or any other metalized substrate), paper and combinations thereof, in which a plastic film forms the surface onto which the electrostatic ink can be applied. In some examples, the substrate comprises a plurality of layers of film of a plastic material, such as a combination of films selected from PE, LLDPE, MDPE, PP, BOPP, PET and OPA, laminated together to form the pre-laminated substrate with a plastic film surface onto which electrostatic ink can be applied. In some examples, the pre-laminated substrate comprises a Paper/Alu/PE, PET/AI/PE, BOPP/met-BOPP or PET/PE laminate.

In some examples, the substrate comprises a thin film of material, wherein the film has a thickness of 600 µm or less, for example, 250 µm or less, for example, 200 µm or less, for example, 150 µm or less, for example, 100 µm or less, for example, 90 µm or less, for example, 80 µm or less, for example, 70 µm or less, for example, 60 µm or less, for example, 50 µm or less, for example, 40 µm or less, for example, 30 µm or less, for example, 20 µm or less, for example, 15 µm or less. In some examples, the film of material is about 12 µm in thickness.

In some examples, the substrate comprises a thin film of material, wherein the film has a thickness of 12 µm or more, for example, 15 µm or more, for example, 20 µm or more, for example, 30 µm or more, for example, 40 µm or more, for example, 50 µm or more, for example, 60 µm or more, for example, 70 µm or more, for example, 80 µm or more, for example, 90 µm or more. In some examples, the film has a thickness of about 100 µm or more, in some examples, about 100 µm or more.

In some examples, the substrate comprises a thin film of material, wherein the film is from 12 µm to 600 µm in thickness, in some examples, from 15 µm to 250 µm in thickness, in some examples, from 20 µm to 200 µm in thickness, in some examples, from 30 µm to 150 µm in thickness, in some examples, 40 µm to 100 µm in thickness, in some examples, 50 µm to 150 µm, in some examples, 60 µm to 100 µm in thickness, in some examples, 70 to 90 µm in thickness.

In some examples, the printed substrate may comprise a plastic substrate; and an electrophotographically printed ink composition disposed on the plastic substrate, wherein the electrophotographically printed ink composition is as described above. In some examples, the printed substrate may comprise a plastic substrate; and an electrophotographically printed ink composition disposed on the plastic substrate; wherein the electrophotographically printed ink composition comprises: a first resin comprising a copolymer of an alkylene monomer and a monomer selected form acrylic acid and methacrylic acid; and a second resin comprising a condensation product of polyvinyl alcohol with an aldehyde.

### EXAMPLES

The following illustrates examples of the methods and other aspects described herein. Thus, these Examples should not be considered as limitations of the present disclosure, but are merely in place to teach how to make examples of the present disclosure.

### Materials

### First Resin

Nucrel^{®} 699: a copolymer of ethylene and methacrylic acid, made with nominally 11 wt.% methacrylic acid (available form DuPont).

Nucrel^{®} 925: a copolymer of ethylene and methacrylic acid, made with nominally 15 wt.% methacrylic acid (available from DuPont).

AC-5120: a copolymer of ethylene and acrylic acid with an acrylic acid content of 15 wt.% (available from Honeywell).

### Second Resin

Butvar^{™} B-98: a polyvinyl butyral resin (PVB; a condensation product of polyvinyl alcohol with butyraldehyde) comprising 18% to 20% vinyl alcohol, 0 to 2.5% vinyl acetate and approximately 80% vinyl butyral and having a weight average molecular weight of 40,000 to 70,000 (available from Eastman Company).

Butvar^{™} B-72: a polyvinyl butyral resin comprising 17.5% to 20% vinyl alcohol, 0 to 2.5% vinyl acetate and approximately 80% vinyl butyral and having a weight average molecular weight of 170,000 to 250,000 (available from Eastman Company).

Butvar^{™} B-76: a polyvinyl butyral resin comprising 11.5% to 13.5% vinyl alcohol, 0 to 2.5% vinyl acetate and approximately 88% vinyl butyral and having a weight average molecular weight of 90,000 to 120,000 (available from Eastman Company).

### Carrier Liquid

Isopar L^{™}: an isoparaffinic oil comprising a mixture of C11-C13 isoalkanes (produced by Exxon Mobil^{™}; CAS number 64742-48-9.

### Pigment

Monarch 800: a specialty black pigment (available from Cabot Corporation).

Alkali Blue 61DT6200: a blue pigment (available from Flint Group, CAS number 65997-04-8).

### Charge Adjuvant

VCA: an aluminium stearate (available from Fisher Scientific).

### Charge Director

NCD (natural charge director): KT (natural soya lecithin in phospholipids and fatty acids), BBP (basic barium petronate, i.e., a barium sulfonate salt of a 21-26 carbon hydrocarbon alkyl, available from Cemtura^{™}), and GT (dodecyl benzene sulfonic acid isopropyl amine, supplied by Croda^{™}). The composition being 6.6 wt.% KT, 9.8 wt.% BBP and 3.6 wt.% GT and balance (80 wt.%) Isopar L^{™}.

### Additives

ACumist^{™} A-6: a small particle size oxidized high density polyethylene with an average particle size of 6.0 µm to 7.5 µm (available from Honeywell).

### Example 1 (R1)

The first resin (1:1 mixture of Nucrel^{®} 925 (400 g) and AC-5120 (400 g)) and second resin (Butvar^{™} B-98 (200 g); total resin weight: 1000 kg) were combined with carrier liquid (1500 kg) in a mixer. The mixture was heated to 130°C for 1 h at a mixing rate of 50 rpm and then for 1.5 h at 70 rpm. The temperature was gradually reduced to 25°C over at least 2.5 h. This produced a paste at 40 wt.% non-volatile solids (NVS).

The paste was added to a ball mill (containing 4.8 mm stainless steel balls) together with pigment (19 wt.% of solids; a 5:1 mixture of Monarch 800 and Alkali Blue 61DT6200), and additives (7 wt.% of solids of which 2 wt.% of solids is charge adjuvant (VCA) and 5 wt.% of solids is ACumist A-6 with additional carrier liquid (total solids content of 20 wt.%). The mixture was ground at 250 rpm for 1.5 h at 58°C and then for 10.5 h at 36°C. The ink was then diluted to 2 wt.% solids. A charge director (NCD; 50-100 mg/g solids) was then added to the composition on the printing press.

### Example 2 (R2)

A liquid electrophotographic ink composition was formulated as described in Example 1 except that the second resin was added to the paste prior to grinding rather than being combined with the first resin in the mixer.

### Example 3 (R3)

A liquid electrophotographic ink composition was formulated as described in Example 1 except that half of the second resin (100 g) was added to the first resin in the mixer to form the paste and half of the second resin (100 g) was added to the paste prior to grinding.

### Example 4

A liquid electrophotographic ink composition was formulated as described in Example 1 except that Butvar^{™} B-72 was used instead of Butvar^{™} B-98.

### Example 5

A liquid electrophotographic ink composition was formulated as described in Example 1 except that Butvar^{™} B-76 was used instead of Butvar^{™} B-98.

### Reference Example 1 (EI4.5)

A liquid electrophotographic ink composition was formulated as described in Example 1 except that the first resin was a 4:1 mixture of Nucrel^{®} 699 with AC-5120 and no second resin was used.

### Reference Example 2

A liquid electrophotographic ink composition was formulated as described in Example 1 except that no second resin was used.

### Formulation table

| | Ref. Ex. 1 (EI4.5) [g] | Ref. Ex. 2 [g] | Ex. 1 (R1) [g] | Ex. 2 (R2) [g] | Ex. 3 (R3) [g] | Ex. 4 [g] | Ex. 5 [g] |
|---|---|---|---|---|---|---|---|
| Nucrel^{®} 699 | 800 | - | - | - | - | - | - |
| Nucrel^{®} 925 | - | 500 | 400 | 400 | 400 | 400 | 400 |
| AC5120 | 200 | 500 | 400 | 400 | 400 | 400 | 400 |
| *Butvar*^{™} | - | - | B-98 | B-98 | B-98 | B-72 | B-76 |
| added in paste | - | - | 200 | - | 100 | 200 | 200 |
| added in grinding | - | - | - | 200 | 100 | - | - |
| Pigment | 257 | 257 | 257 | 257 | 257 | 257 | 257 |
| Additives | 95 | 95 | 95 | 95 | 95 | 95 | 95 |

The compositions therefore comprise 74 wt.% resin mixture, 19 wt.% pigments and 7 wt.% additives (VCA and Acumist A-6).

### Tests Methods

Liquid electrophotographic ink compositions according to Examples 1 to 5 and Reference Example 1 were electrophotographically printed onto paper (UPM Finesse coated paper and UPM Fine uncoated paper) and plastic films (polyethylene terephthalate film). Prior to printing on PET, the PET film was corona treated. Ten minutes after printing, peeling tests were then performed on the printed substrates.

An adhesive tape (3M Scotch tape #234) was applied to the printed substrate. A heavy roller (2 kg) was rolled over the adhesive tape 10 times. The adhesive tape was then removed rapidly at 180° over 2 seconds.

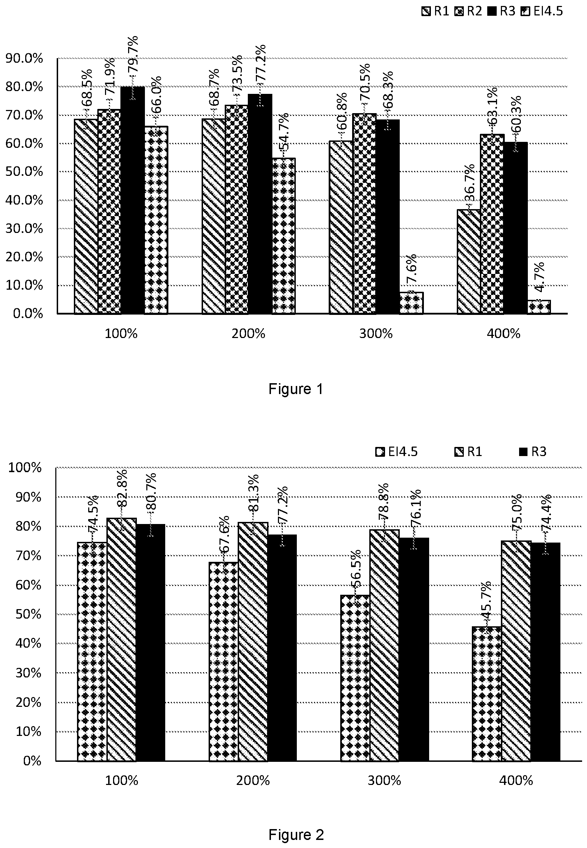

The amount of ink left on the printed substrate was determined by Flatbed scanning at a spatial resolution of 300 dpi by using an EPSON GT 10000+ scanner. Results for peeling tests of the printed ink compositions of Examples 1 to 3 and Reference Example 1 are shown in figures 1 to 3.

Figure 1 shows the results of peeling tests on the printed ink compositions of Examples 1 (R1), 2 (R2) and 3 (R3) and Reference Example 1 (EI4.5) printed on polyethylene terephthalate (PET) film at a variety of coverages (100%, 200%, 300% and 400%). As can be seen from Figure 1, the inclusion of polyvinyl butyral in the ink compositions (Examples 1 to 3) results in improved adhesion to polyethylene terephthalate films compared with the Reference Example 1 composition, with the greatest improvement in adhesion shown for higher percentage coverages. Additionally, the composition of Example 1 shows lower adhesion than the compositions of Examples 2 and 3, in which at least some of the polyvinyl butyral was added during the grinding step. Without wishing to be bound by any theory, the inventors believe that this results from the polar active groups of the polyvinyl butyral being less exposed if it is added during paste formation and therefore less available to improve adhesion.

Figure 2 shows the results of peeling tests on the printed ink compositions of Examples 1 (R1) and 3 (R3) and Reference Example 1 (EI4.5) printed on UPM Fine (uncoated) paper at a variety of coverages (100%, 200%, 300% and 400%). As shown in Figure 2, when printed on uncoated paper (UPM Fine), the presence of polyvinyl butyral in the ink compositions improves adhesion to the paper at all coverages and is similar for all ink production methods.

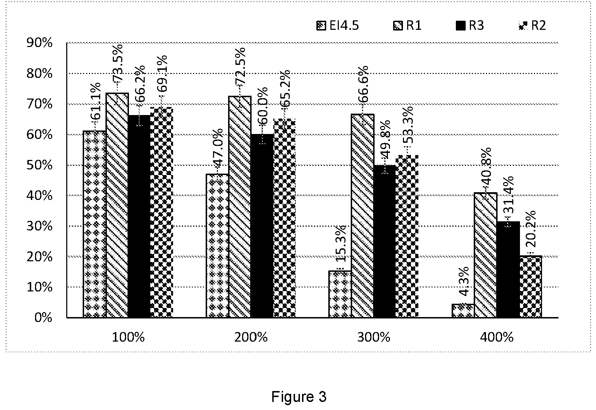

Figure 3 shows the results of peeling tests on the printed ink compositions of Examples 1 (R1), 2 (R2) and 3 (R3) and Reference Example 1 (EI4.5) printed on UPM Finesse (coated) paper at a variety of coverages (100%, 200%, 300% and 400%). As shown in Figure 3, when printed on coated paper (UPM Finesse), the presence of polyvinyl butyral in the ink compositions improves adhesion to the paper at all coverages, with significant improvements shown at 300% and 400% coverages.

Reference Example 2 performs similarly to Reference Example 1 in peeling tests.

### Summary of Results

The ink compositions of Examples 1 to 5 were produced with PVB resin as part of the resin composition. The PVB resin was added to the ink composition at several stages during ink production: as part of the paste formation step (Example 1), as part of the grinding step (Example 3) and as part of both the paste and grinding steps (Example 2). Additionally, different types of PVB resin were added to the ink compositions and it was found that PVB resin with a weight average molecular weight range of 40,000 to 70,000 (Examples 1 to 3) showed a greater improvement in adhesion than ink compositions including PVB resins with higher weight average molecular weights (Examples 4 and 5).

There were improvements in peel resistance for all ink compositions that included PVB resins, with the greatest improvements shown at high percentage coverages (300% and 400%).

The PET plastic was first corona treated and then printed. Ink compositions of Examples 2 and 3 showed the best peel resistance on this substrate. In these ink compositions, at least some of the PVB was added to the ink composition during the grinding process.

Adhesion to two types of paper was also tested and significant improvements in peel resistance were seen at 200% to 400% coverage for ink compositions of Examples 1 to 3. At 100% coverage, the improvement in peel resistance was minor for all substrate types.

The PVB resin contributes to the mechanical adhesion of the ink composition to a variety of substrates.

It is intended, that the invention be limited by the scope of the following claims Unless otherwise stated, the features of any dependent claim can be combined with the features of any of the other dependent claims and any of the independent claims.

## Claims

1. An electrophotographic ink composition comprising:
a first resin comprising a copolymer of an alkylene monomer and a monomer selected from acrylic acid and methacrylic acid; and
a second resin comprising a condensation product of polyvinyl alcohol with an aldehyde.

2. The electrophotographic ink composition of claim 1, wherein the aldehyde is selected from C1 to C8 aldehydes.

3. The electrophotographic ink composition of claim 1, wherein the second resin is polyvinyl butyral.

4. The electrophotographic ink composition of claim 1, wherein the second resin constitutes 10 wt.% to 40 wt.% of the total amount of resin.

5. The electrophotographic ink composition of claim 1, wherein the second resin has a weight average molecular weight of 300,000 or less.

6. The electrophotographic ink composition of claim 1, wherein the second resin comprises 5% or less of vinyl acetate monomer.

7. The electrophotographic ink composition of claim 1, wherein the second resin comprises 30% or less vinyl alcohol monomer.

8. The electrophotographic ink composition of claim 1, wherein the first resin comprises a copolymer of an alkylene monomer and an acrylic acid monomer and a copolymer of an alkylene monomer and a methacrylic acid monomer.

9. The electrophotographic ink composition of claim 8, wherein the first resin comprises a 50:50 to 60:40 ratio of the acrylic acid containing copolymer to the methacrylic acid containing copolymer.

10. A method of producing an electrophotographic ink composition, the method comprising combining:
a first resin comprising a copolymer of an alkylene monomer and a monomer selected from acrylic acid and methacrylic acid; and
a second resin comprising a condensation product of polyvinyl alcohol with an aldehyde.

11. The method of producing an electrophotographic ink composition of claim 10 comprising suspending the first resin and the second resin in a carrier liquid.

12. The method of producing an electrophotographic ink composition of claim 10, wherein the first resin is combined with the carrier liquid to form a paste and subsequently combining the second resin with the paste.

13. The method of producing an electrophotographic ink composition of claim 10, wherein the first resin and a portion of the second resin is combined with the carrier liquid to form a paste and subsequently combining the remaining portion of the second resin with the paste.

14. A method of producing a printed substrate comprising applying an electrophotographic ink composition to a plastic substrate with an electrostatic printer, wherein the electrophotographic ink composition comprises:
a first resin comprising a copolymer of an alkylene monomer and a monomer selected from acrylic acid and methacrylic acid; and
a second resin comprising a condensation product of polyvinyl alcohol with an aldehyde.

15. A printed substrate comprising:
a plastic substrate; and
an electrophotographically printed ink composition disposed on the plastic substrate;
wherein the electrophotographically printed ink composition comprises:
a first resin comprising a copolymer of an alkylene monomer and a monomer selected form acrylic acid and methacrylic acid; and
a second resin comprising a condensation product of polyvinyl alcohol with an aldehyde.

## Patentansprüche

1. Elektrofotografische Tintenzusammensetzung, die Folgendes umfasst:
ein erstes Harz, das ein Copolymer eines Alkylenmonomers und eines Monomers, ausgewählt aus Acrylsäure und Methacrylsäure, umfasst; und
ein zweites Harz, das ein Kondensationsprodukt von Polyvinylalkohol mit einem Aldehyd umfasst.

2. Elektrofotografische Tintenzusammensetzung nach Anspruch 1, wobei der Aldehyd aus C1 bis C8-Aldehyden ausgewählt ist.

3. Elektrofotografische Tintenzusammensetzung nach Anspruch 1, wobei das zweite Harz Polyvinylbutyral ist.

4. Elektrofotografische Tintenzusammensetzung nach Anspruch 1, wobei das zweite Harz 10 Gew.-% bis 40 Gew.-% der Gesamtmenge des Harzes ausmacht.

5. Elektrofotografische Tintenzusammensetzung nach Anspruch 1, wobei das zweite Harz ein Massenmittel von 300.000 oder weniger aufweist.

6. Elektrofotografische Tintenzusammensetzung nach Anspruch 1, wobei das zweite Harz 5 % oder weniger Vinylacetatmonomer umfasst.

7. Elektrofotografische Tintenzusammensetzung nach Anspruch 1, wobei das zweite Harz 30 % oder weniger Vinylalkoholmonomer umfasst.

8. Elektrofotografische Tintenzusammensetzung nach Anspruch 1, wobei das erste Harz ein Copolymer eines Alkylenmonomers und eines Acrylsäuremonomers und ein Copolymer eines Alkylenmonomers und eines Methacrylsäuremonomers umfasst.

9. Elektrofotografische Tintenzusammensetzung nach Anspruch 8, wobei das erste Harz ein Verhältnis von 50 : 50 bis 60 : 40 des acrylsäurehaltigen Copolymers zu dem methacrylsäurehaltigen Copolymer umfasst.

10. Verfahren zum Herstellen einer elektrofotografischen Tintenzusammensetzung, wobei das Verfahren Folgendes umfasst:
ein erstes Harz, das ein Copolymer eines Alkylenmonomers und eines Monomers, ausgewählt aus Acrylsäure und Methacrylsäure, umfasst; und
ein zweites Harz, das ein Kondensationsprodukt von Polyvinylalkohol mit einem Aldehyd umfasst.

11. Verfahren zum Herstellen einer elektrofotografischen Tintenzusammensetzung nach Anspruch 10, das ein Suspendieren des ersten Harzes und des zweiten Harzes in einer Trägerflüssigkeit umfasst.

12. Verfahren zum Herstellen einer elektrofotografischen Tintenzusammensetzung nach Anspruch 10, wobei das erste Harz mit der Trägerflüssigkeit kombiniert wird, um eine Paste auszubilden, und anschließend das zweite Harz mit der Paste kombiniert wird.

13. Verfahren zum Herstellen einer elektrofotografischen Tintenzusammensetzung nach Anspruch 10, wobei das erste Harz und ein Anteil des zweiten Harzes mit der Trägerflüssigkeit kombiniert werden, um eine Paste auszubilden, und anschließend der verbleibende Anteil des zweiten Harzes mit der Paste kombiniert wird.

14. Verfahren zum Herstellen eines bedruckten Substrats, das ein Aufbringen einer elektrofotografischen Tintenzusammensetzung auf ein Kunststoffsubstrat mit einem elektrostatischen Drucker umfasst, wobei die elektrofotografische Tintenzusammensetzung Folgendes umfasst:
ein erstes Harz, das ein Copolymer eines Alkylenmonomers und eines Monomers, ausgewählt aus Acrylsäure und Methacrylsäure, umfasst; und
ein zweites Harz, das ein Kondensationsprodukt von Polyvinylalkohol mit einem Aldehyd umfasst.

15. Bedrucktes Substrat, das Folgendes umfasst:
ein Kunststoffsubstrat;
eine elektrofotografisch gedruckte Tintenzusammensetzung, die auf dem Kunststoffsubstrat angeordnet ist;
wobei die elektrofotografisch gedruckte Tintenzusammensetzung Folgendes umfasst:
ein erstes Harz, das ein Copolymer eines Alkylenmonomers und eines Monomers, ausgewählt aus Acrylsäure und Methacrylsäure, umfasst; und
ein zweites Harz, das ein Kondensationsprodukt von Polyvinylalkohol mit einem Aldehyd umfasst.

## Revendications

1. Composition d'encre électrophotographique comprenant :
une première résine comprenant un copolymère d'un monomère d'alkylène et d'un monomère sélectionné parmi l'acide acrylique et l'acide méthacrylique ; et
une seconde résine comprenant un produit de condensation d'alcool polyvinylique avec un aldéhyde.

2. Composition d'encre électrophotographique selon la revendication 1, dans laquelle l'aldéhyde est sélectionné parmi les aldéhydes en C1 à C8.

3. Composition d'encre électrophotographique selon la revendication 1, dans laquelle la seconde résine est du polyvinylbutyral.

4. Composition d'encre électrophotographique selon la revendication 1, dans laquelle la seconde résine constitue 10 % en poids à 40 % en poids de la quantité totale de résine.

5. Composition d'encre électrophotographique selon la revendication 1, dans laquelle la seconde résine présente un poids moléculaire moyen en poids de 300 000 ou moins.

6. Composition d'encre électrophotographique selon la revendication 1, dans laquelle la seconde résine comprend 5 % ou moins de monomère d'acétate de vinyle.

7. Composition d'encre électrophotographique selon la revendication 1, dans laquelle la seconde résine comprend 30 % ou moins de monomère d'alcool vinylique.

8. Composition d'encre électrophotographique selon la revendication 1, dans laquelle la première résine comprend un copolymère d'un monomère d'alkylène et d'un monomère d'acide acrylique et un copolymère d'un monomère d'alkylène et d'un monomère d'acide méthacrylique.

9. Composition d'encre électrophotographique selon la revendication 8, dans laquelle la première résine comprend un rapport de 50:50 à 60:40 du copolymère contenant de l'acide acrylique au copolymère contenant de l'acide méthacrylique.

10. Procédé de fabrication d'une composition d'encre électrostatique, le procédé comprenant la combinaison de :
une première résine comprenant un copolymère d'un monomère d'alkylène et d'un monomère sélectionné parmi l'acide acrylique et l'acide méthacrylique ; et
une seconde résine comprenant un produit de condensation d'alcool polyvinylique avec un aldéhyde.

11. Procédé de production d'une composition d'encre électrophotographique selon la revendication 10, comprenant la mise en suspension de la première résine et de la seconde résine dans un liquide porteur.

12. Procédé de production d'une composition d'encre électrophotographique selon la revendication 10, dans lequel la première résine est combinée avec le liquide porteur pour former une pâte et combinant ensuite la seconde résine avec la pâte.

13. Procédé de production d'une composition d'encre électrophotographique selon la revendication 10, dans lequel la première résine et une partie de la seconde résine sont combinées avec le liquide porteur pour former une pâte et combinant ensuite la partie restante de la seconde résine avec la pâte.

14. Procédé de production d'un substrat imprimé comprenant l'application d'une composition d'encre électrophotographique sur un substrat en plastique à l'aide d'une imprimante électrostatique, dans lequel la composition d'encre électrophotographique comprend :
une première résine comprenant un copolymère d'un monomère d'alkylène et d'un monomère sélectionné parmi l'acide acrylique et l'acide méthacrylique ; et
une seconde résine comprenant un produit de condensation d'alcool polyvinylique avec un aldéhyde.

15. Substrat imprimé comprenant:
un substrat en plastique ; et
une composition d'encre imprimée électrophotographiquement disposée sur le substrat en plastique ;
la composition d'encre imprimée électrophotographiquement comprenant :
une première résine comprenant un copolymère d'un monomère d'alkylène et
d'un monomère sélectionné parmi l'acide acrylique et l'acide méthacrylique ; et
une seconde résine comprenant un produit de condensation d'alcool polyvinylique avec un aldéhyde.
